# EUROPEAN PATENT SPECIFICATION

(11) **EP 3 883 752 B1**
(45) Date of publication and mention of the grant of the patent: **03.01.2024**
(21) Application number: 19808651.4
(22) Date of filing: 19.11.2019
(51) Int. Cl.: B29C 64/245, B22F 3/105, B29C 64/153, B29C 64/371, B29C 64/393

(54) **SYSTEM COMPRISING AN APPARATUS FOR PRODUCING AN OBJECT BY MEANS OF ADDITIVE MANUFACTURING AND A METHOD FOR PRODUCING AN OBJECT BY MEANS OF ADDITIVE MANUFACTURING USING AN APPARATUS**
SYSTEM MIT EINER VORRICHTUNG ZUR HERSTELLUNG EINES GEGENSTANDES MITTELS GENERATIVER FERTIGUNG UND VERFAHREN ZUR HERSTELLUNG EINES GEGENSTANDES MITTELS GENERATIVER FERTIGUNG UNTER VERWENDUNG EINER VORRICHTUNG
SYSTÈME COMPRENANT UN APPAREIL POUR PRODUIRE UN OBJET PAR FABRICATION ADDITIVE ET PROCÉDÉ POUR PRODUIRE UN OBJET PAR FABRICATION ADDITIVE À L'AIDE D'UN APPAREIL

(30) Priority: 20.11.2018 NL 2022029
(43) Date of publication of application: 29.09.2021
(73) Proprietor: Additive Industries B.V., 5600 GA Eindhoven (NL)
(72) Inventor: PEETERS, Johannes Franciscus Willebrordus, 5600 GA Eindhoven (NL); VAES, Mark Herman Else, 5600 GA Eindhoven (NL)
(74) Representative: Algemeen Octrooi- en Merkenbureau B.V.
(86) International application number: PCT/NL2019/050753
(87) International publication number: WO 2020/106139

(56) References cited:
- WO-A1-2018/001454
- WO-A1-2018/204981
- WO-A2-2012/146943
- DE-A1-102016 104 677
- US-A1- 2016 180 061

## Description

According to a first aspect the present disclosure relates to a system comprising an apparatus for producing an object by means of additive manufacturing.

According to a second aspect the present disclosure relates to a method for producing an object by means of additive manufacturing using an apparatus.

3D printing or additive manufacturing refers to any of various processes for manufacturing a three-dimensional object. Traditional techniques like injection molding can be less expensive for manufacturing, for example, polymer products in high quantities, but 3D printing or additive manufacturing can be faster, more flexible and less expensive when producing relatively small quantities of three-dimensional objects.

It is anticipated that additive manufacturing becomes more and more important in the future, as the increasing competitive pressure forces companies to not only manufacture more economically with a constant high product quality but also to save time and costs in the area of product development. The life span of products is continuously shortened. In addition to product quality and product costs, the moment of market introduction is becoming increasingly important for the success of a product.

The three-dimensional object may be produced by selectively solidifying, in a layer-like fashion, a powder, paper or sheet material to produce a three-dimensional, 3D, object. In particular, a computer controlled additive manufacturing apparatus may be used which sequentially sinters a plurality of layers to build the desired object in a layer-by-layer fashion. Primarily additive processes are used, in which successive layers of material are laid down under computer control. These objects can be of almost any shape or geometry, and are produced from a 3D model or other electronic data source.

In order to print a three-dimensional object, a printable model is to be created with a computer design package or via a 3D scanner, for example. Usually, the input is a 3D CAD file such as an STL file, a STEP file or a IGS file. Before printing the object from a CAD file, the file is to be processed by a piece of software, which converts the model into a series of thin subsequent layers. Further, apparatus settings and vectors are generated for controlling the creation of each of the subsequent layers.

A laser comprised in the computer controlled additive manufacturing apparatus follows these settings and vectors to solidify successive layers of material to build the 3D object from a series of cross sections. These layers, which correspond to the virtual cross sections from the CAD model, are during this process joined or fused at the same time to create the final 3D object.

Known systems to print a three-dimensional object comprise:
- a process chamber for receiving a bath of powdered material which can be solidified by exposure to electromagnetic radiation;
- a support for positioning the object in relation to a surface level of the bath of powdered material;
- a solidifying device arranged for emitting a beam of electromagnetic radiation on the surface level for solidifying a selective part of said powdered material.

WO2018/001454 A1 discloses an additive manufacturing apparatus comprising a status acquisition device arranged for acquiring information related to a status of said apparatus and a control unit for receiving said acquired information related to said status of said apparatus.

One of the challenges of the known systems, in particular for known systems for producing a metal object by additive manufacturing, is how to further improve the quality of the manufactured object while realising a relative large manufacturing output.

It is an object of the present disclosure to provide a system and a method for producing an object, by additive manufacturing, that allows to improve the quality of the manufactured object while realising a relative large manufacturing output.

This objective is achieved by the system according to claim 1, wherein the system comprises:
- a status acquisition device arranged for acquiring information related to a status of said apparatus; and
- a control unit that is arranged for receiving said acquired information related to said status of said apparatus.

By providing a status acquisition device, information, preferably information directly related to operating conditions of said apparatus which define an output performance of said apparatus, may be acquired. The acquired information, after receiving by the control unit, may be used by the control unit to control the apparatus as regards allocation of production of the object and/or the further object to said apparatus. The production of the object may for instance be delayed or interrupted and thereby realise a relative large manufacturing output if the acquired information for instance indicates that the object will not meet a required quality level or if from the acquired information it may be derived that the object will not meet a required quality level.

Preferably, said status of said apparatus is directly related to operating conditions of said apparatus which define an output performance of said apparatus.

Preferably, said control unit is further arranged for controlling production, by means of additive manufacturing, of said object and/or a further object taking into account said acquired information.

It is beneficial if said status acquisition device is arranged for acquiring said information during manufacturing of said object.

In this regard it is beneficial if said system is arranged for acquiring said information, by said status acquisition device, at a rate of at least once per hour, preferably at a rate at once per second.

Preferably, said system is arranged for said controlling of production, by said control unit, at a rate corresponding to said rate of said acquiring of said information.

By providing a status acquisition device, information, preferably information directly related to operating conditions of said apparatus which define an output performance of said apparatus, may be acquired. The acquired information, after receiving by the control unit, may be used by the control unit to control the apparatus as regards the production running thereon, thereby allowing to control the production of the object during production thereof. The production of the object may for instance be interrupted after taking into account said acquired information and thereby realise a relative large manufacturing output if the acquired information for instance indicates that the object will not meet a required quality level.

The object and/or the further object may be part of a print job including several objects that are to be printed in one single production run of the apparatus.

Alternatively, the acquired information may be used to control the production of a further object to be produced by additive manufacturing. If for instance the further object is part of the print job including several objects, the print job may be changed taking into account the acquired information. The print job may for instance be changed by allocating the production of the further object to a further print job, wherein the further print job is to executed in the future. Allocation of the further object to a further print job may for instance be implemented after taking into account said acquired information and thereby realise a relative large manufacturing output if the acquired information for instance indicates that the further object will not meet a required quality level if the further object remains part of the print job.

According to the present claims, said acquired information, acquired by said status acquisition device comprises a calibration status of the apparatus.

According to the present claims said acquired information, acquired by said status acquisition device:
- a calibration status of said apparatus
and may further comprise:
- an expected time to service of said apparatus;
- an actual expected remaining processing time for manufacturing said object;
- a measure of a quality and/or quantity of said powdered material;
- a system event such as an error or a warning.

Acquiring a calibration status of said apparatus is beneficial for allowing the control unit to control production such that allocation to the apparatus for manufacturing of an object and/or a further object may be limited to objects that correspond to the calibration status and thereby realise a relative large manufacturing output while meeting a required quality level. It is beneficial if said system is arranged for acquiring said calibration status of said apparatus, by said status acquisition device, at a rate of at least once per hour, preferably at a rate at once per 30 minutes.

Acquiring an expected time to service of said apparatus is beneficial for allowing the control unit to control production such that allocation to the apparatus for manufacturing of an object may be limited to objects that may be completed before service of said apparatus is expected and thereby realise a relative large manufacturing output while meeting a required quality level. It is beneficial if said system is arranged for acquiring said expected time to service of said apparatus, by said status acquisition device, at a rate of at least 4 times per minute, preferably at a rate at once per second.

Acquiring an actual expected remaining processing time for manufacturing said object is beneficial for allowing the control unit to control production such that a start of production of an object may be determined relatively accurately. It is beneficial if said system is arranged for acquiring said actual expected remaining processing time, by said status acquisition device, at a rate of at least 4 times per minute, preferably at a rate at once per second.

Acquiring both an expected time to service of said apparatus and an expected remaining processing time is beneficial for allowing the control unit to stop production of the object if the expected remaining processing time is longer than the expected time to service thereby realising a relative large manufacturing output while meeting a required quality level.

Acquiring a measure of a quality and/or a quantity of said powdered material is beneficial for allowing the control unit to control production such that allocation to the apparatus for manufacturing of an object may be limited to objects that correspond to the quality and/or a quantity of said powdered material and thereby realise a relative large manufacturing output while meeting a required quality level.

It is beneficial if said system is arranged for acquiring said measure of said quality of said powdered material, by said status acquisition device, at a rate of at least once per hour, preferably at a rate at once per 30 minutes.

Preferably, said quality and/or said quantity of said powdered material is during manufacturing of said object. This is beneficial for allowing the control unit to stop production of the object if the quality and/or the quantity of the powdered material does not meet a predetermined value.

Within the context of the present disclosure a system event is to be understood as an event that may be triggered by an interrupt. The interrupt is an activation signal generated by said apparatus. The system event may be related to an error causing the apparatus to stop production of said object and/or said further object. An error is to be understood as a disruptive system event that may be notified as a system fault, for instance an error message. Alternatively, the system event may be related to a non-disruptive event such as a warning. A warning is to be understood as a non-disruptive system event that may be notified as a faulty system state, for instance a warning message. A warning may be an indication that an error may occur or a notification relating to an event such as removing powder from said process chamber. Acquiring a system event is beneficial for allowing the control unit to control production such that allocation to the apparatus of an object, or the production of the object and/or further object may be controlled.

According to the present claims, said calibration status, acquired by said status acquisition device, is determined taking into account a measure of an actual, historical and/or expected calibration status. By taking into account a measure of an actual, historical and/or expected calibration status a measure of an accuracy of said object being manufactured may be determined for predicting whether the object will meet a predetermined quality level. This is beneficial for realising a relative large manufacturing output while meeting a required quality level.

It is beneficial if said expected time to service, acquired by said status acquisition device, is determined taking into account a measure of an actual, historical and/or expected time to service. By taking into account a measure of an actual, historical and/or expected time to service it may be determined whether manufacturing of the object will be completed before a required service of the apparatus. This is beneficial for realising a relative large manufacturing output while meeting a required quality level.

Preferably, said actual expected remaining processing time, acquired by said status acquisition device, is determined taking into account a measure of an actual processing speed, historical processing speed and/or expected processing speed for manufacturing said object. This is beneficial for realising a relative large manufacturing output while meeting a required quality level.

It is advantageous if said measure of said quality of said powdered material, acquired by said status acquisition device, is determined taking into account a measure of an actual, historical and/or expected powder material quality. By taking into account a measure of an actual, historical and/or expected powder material quality it may be determined whether the object will meet a predetermined quality level. This is beneficial for realising a relative large manufacturing output while meeting a required quality level.

In a very practical embodiment of the system according to the present disclosure, said system comprises a plurality of said apparatuses. This allows the control unit to control production of an object and/or a further object on said plurality of said apparatuses taking into account said acquired information. This is beneficial for allocating production to said plurality of said apparatuses and thereby realise a relative large manufacturing output while meeting a required quality level.

In this regard it is beneficial if at least two of the apparatuses of the plurality of apparatuses differ by at least one of:
- a number of solidifying devices;
- a wavelength of said beam of electromagnetic radiation;
- an output power of said solidifying device.

In this regard it is beneficial if said object and said further object are allocated, by said control unit, to different apparatuses of said plurality of said apparatuses taking into account said acquired information. Allocation of said object and said further object to said apparatuses in this manner contributes to scheduling the production of said object and said further object in a way such that the available production time is used relatively efficient. This is beneficial for realising a relative large manufacturing output while meeting a required quality level.

Preferably, said system comprises a plurality of said status acquisition devices and a plurality of said control units, wherein each of said apparatuses comprises one of said status acquisition devices. This is beneficial for realising a relative large manufacturing output while meeting a required quality level.

Preferably, said system comprises a plurality of said status acquisition devices and a plurality of said control units, wherein each of said apparatuses comprises one of said status acquisition devices and one of said control units. This is beneficial for realising a relative large manufacturing output while meeting a required quality level.

The system according to the first aspect of the present invention is arranged for scheduling a calibration stop and/or a calibration downtime taking into account said determined calibration status. This is beneficial for realising a relative large manufacturing output while meeting a required quality level. Scheduling a calibration stop and/or a calibration downtime is beneficial for avoiding, or at least significantly reducing, the risk of a need to halt a build process during production of the object and/or the further object.

It is advantageous if said system is arranged for scheduling a service stop and/or a service downtime taking into account said determined expected time to service. This is beneficial for realising a relative large manufacturing output while meeting a required quality level. Scheduling a service stop and/or a service downtime is beneficial for avoiding, or at least significantly reducing, the risk of a need to halt a build process during production of the object and/or the further object.

According to the present claims the control unit is further arranged for:
- scheduling a calibration stop and/or a calibration downtime taking into account said determined calibration status;
and may further be arranged for:
- scheduling a service stop and/or a service downtime taking into account said determined expected time to service

In this regard it is beneficial if said control unit is further arranged for controlling production, by means of additive manufacturing, of said object and/or said further object taking into account:
- said scheduled calibration stop and/or said calibration downtime;
and optionally:
- said scheduled service stop and/or said service downtime.

In this regard it is beneficial if said object and said further object are allocated, by said control unit, to different apparatuses of said plurality of said apparatuses taking into account said at least one of:
- said scheduled calibration stop and/or said calibration downtime; and
- said scheduled service stop and/or said service downtime.
Allocation of said object and said further object to said apparatuses in this manner contributes to scheduling the production of said object and said further object in a way such that the available production time is used relatively efficient. This is beneficial for realising a relative large manufacturing output while meeting a required quality level.

It is beneficial if said system comprises a register unit comprising historical information related to at least one of said calibration status of said apparatus, said expected time to service of said apparatus, said actual expected remaining processing time for manufacturing said object and said measure of a quality of said powdered material.

Preferably, said register unit comprises historical information related to an output quality of manufactured objects, wherein said historical information related to said output quality is coupled with at least one of said calibration status of said apparatus, said expected time to service of said apparatus, said actual expected remaining processing time for manufacturing said object and said measure of a quality of said powdered material.

In this regard, it is beneficial if said control unit is communicatively coupled to said register unit and arranged for controlling production taking into account said acquired information and said historical information comprised by said register unit.

In a practical embodiment, the system according to the first aspect of the present disclosure further comprises:
- a determination unit, communicatively coupled to said status acquisition device, wherein said determination unit is arranged for determining a measure of a quality of said object and/or said further object taking into account said information acquired by said status acquisition device. The production of the object may for instance be delayed or interrupted and thereby realise a relative large manufacturing output if it is determined, by the determination unit, that the object will not meet a required quality level.

Preferably, the system is arranged for determining a duration of said calibration downtime taking into account a measure of an actual, historical and/or expected calibration downtime and optionally arranged for determining a duration of said service downtime taking into account a measure of an actual, historical and/or expected time to service downtime.

According to the second aspect the present disclosure relates to a method for producing an object by means of additive manufacturing using an apparatus according to appended claim 11.

Preferably, said method comprises the step of:
- controlling production, by means of additive manufacturing, of said object and/or said further object taking into account said acquired information.

Preferably, the status of said apparatus is directly related to operating conditions of said apparatus which define an output performance of said apparatus.

Preferably, said control unit is further arranged for controlling production, by means of additive manufacturing, of said object and/or a further object taking into account said acquired information

In this regard, it is beneficial if said provided status acquisition device is arranged for acquiring said information during manufacturing of said object, wherein said acquiring of said information is performed during said manufacturing of said object.

Embodiments of the method according to the second aspect correspond to embodiments of the system according to the first aspect of the present disclosure. The advantages of the method according to the second aspect correspond to advantages of the system according to first aspect of the present disclosure presented previously.

Preferably, said control unit is arranged for acquiring information comprising:
- a calibration status of said apparatus, wherein said calibration status, acquired by said status acquisition device, is determined taking into account a measure of an actual, historical and/or expected calibration status;
and may be arranged for acquiring information comprising:
- an expected time to service of said apparatus, wherein said expected time to service, acquired by said status acquisition device, is determined taking into account a measure of an actual, historical and/or expected time to service.

According to the present claims said control unit is arranged for:
- scheduling a calibration stop and/or a calibration downtime taking into account said determined calibration status;
and may be arranged for:
- scheduling a service stop and/or a service downtime taking into account said determined expected time to service.

The method further comprises the step of:
- scheduling, by said control unit:
   - said calibration stop and said calibration downtime taking into account said determined calibration status;
   and may comprise the step of scheduling, by said control unit:
   - said service stop and/or said service downtime taking into account said determined expected time to service.

Preferably, said provided status acquisition device is arranged for acquiring said information during manufacturing of said object, wherein said acquiring of said information is performed during said manufacturing of said object.

It is beneficial if said system is arranged for acquiring, by said status acquisition device, said information related to said status of said apparatus at a rate of in the range of once per second to once per hour, wherein said acquiring of said information is performed at a rate in the range of once per second to once per hour during said manufacturing of said object.

It is advantageous if said method further comprises the steps of:
- providing a determination unit, communicatively coupled to said status acquisition device, wherein said determination unit is arranged for determining a measure of a quality of said object and/or said further object taking into account said information acquired by said status acquisition device;
- determining, by said determination unit, a measure of a quality of said object and/or said further object taking into account said information acquired by said status acquisition device. The production of the object may for instance be delayed or interrupted and thereby realise a relative large manufacturing output if it is determined, by the determination unit, that the object will not meet a required quality level.

According to the present claims said method may further comprises the step of:
- controlling, by said control unit, production, by means of additive manufacturing, of said object and/or said further object taking into account:
- said scheduled calibration stop and/or said calibration downtime;

and optionally said scheduled service stop and/or said service downtime;
such that:
   - said calibration stop and said calibration downtime taking into account said determined calibration status is performed after completion of said manufacturing of said object and/or before start of said manufacturing of said further object;
and optionally
   - said service stop and/or said service downtime taking into account said determined expected time to service is performed after completion of said manufacturing of said object and/or before start of said manufacturing of said further object.

According to the present claims, during said step of scheduling,
- said calibration stop and said calibration downtime taking into account said determined calibration status;
and optionally
- said service stop and/or said service downtime taking into account said determined expected time to service;
is scheduled such that:
- said calibration stop and said calibration downtime taking into account said determined calibration status is performed after completion of said manufacturing of said object and/or before start of said manufacturing of said further object;
and optionally
- said service stop and/or said service downtime taking into account said determined expected time to service;
is performed after completion of said manufacturing of said object and/or before start of said manufacturing of said further object.

The system and method to the present disclosure will next be explained by means of the accompanying figures. In the figures:
Fig. 1 shows a schematic overview of a system according to the first aspect of the present disclosure;

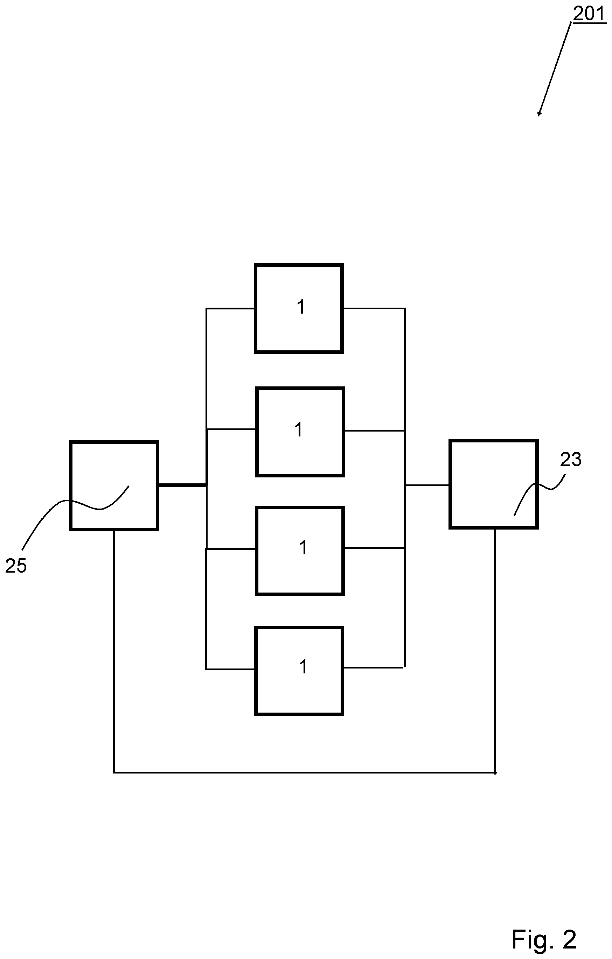

Fig. 2 shows a schematic overview of another system according to the first aspect of the present disclosure;

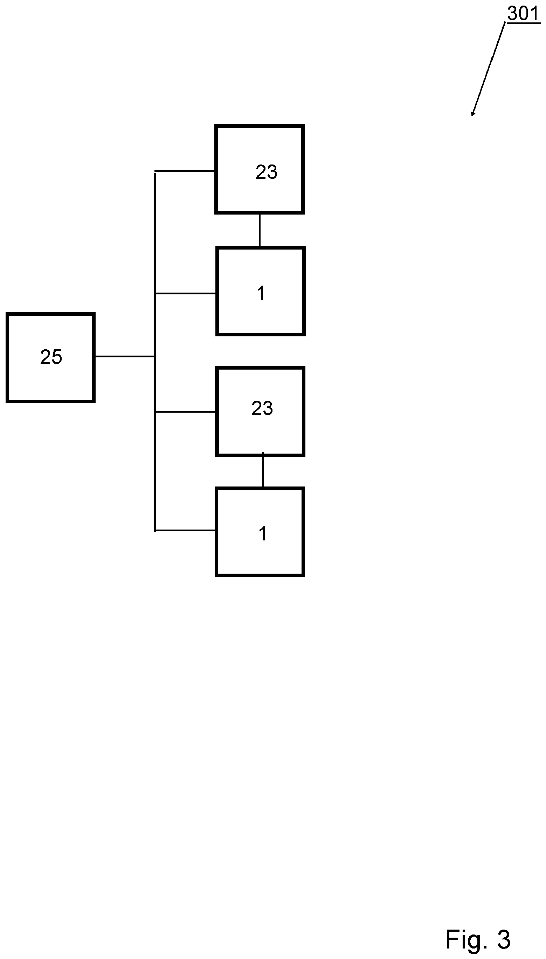

Fig. 3 shows a schematic overview of yet another system according to the first aspect of the present disclosure;

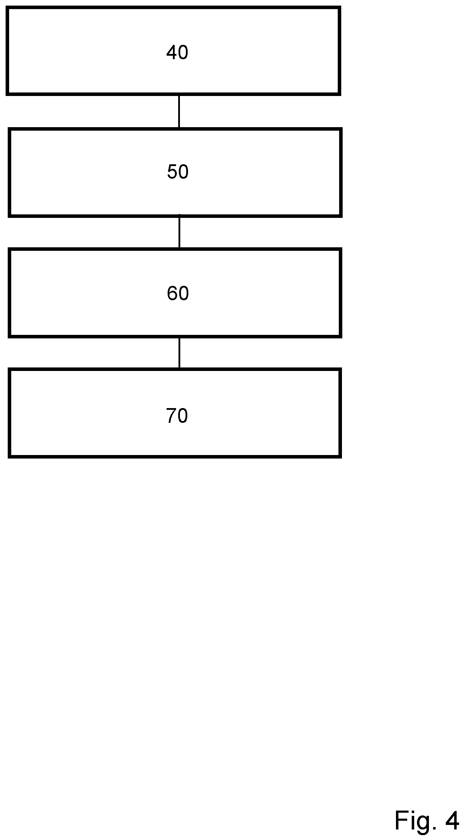

Fig. 4 shows a schematic overview of a method according to the second aspect of the present disclosure

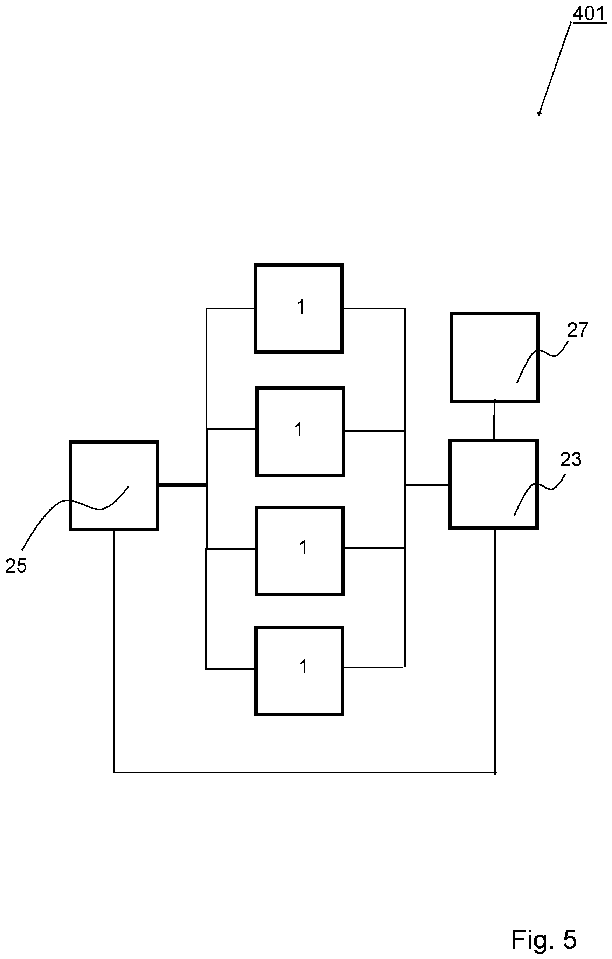

Fig. 5 shows a schematic overview of a further system according to the first aspect of the present disclosure

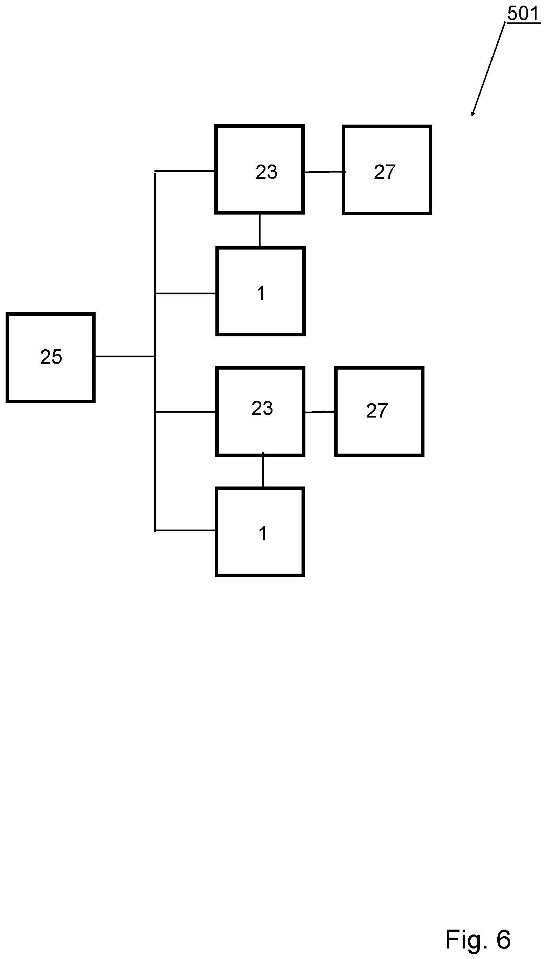

Fig. 6 shows a schematic overview of a jet further system according to the first aspect of the present disclosure

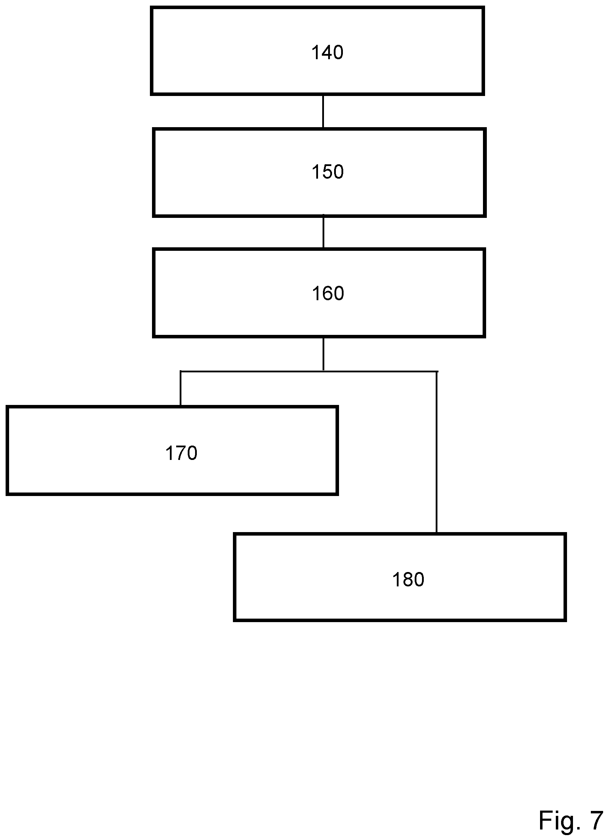

Fig. 7 shows a schematic overview of a further method according to the second aspect of the present disclosure.

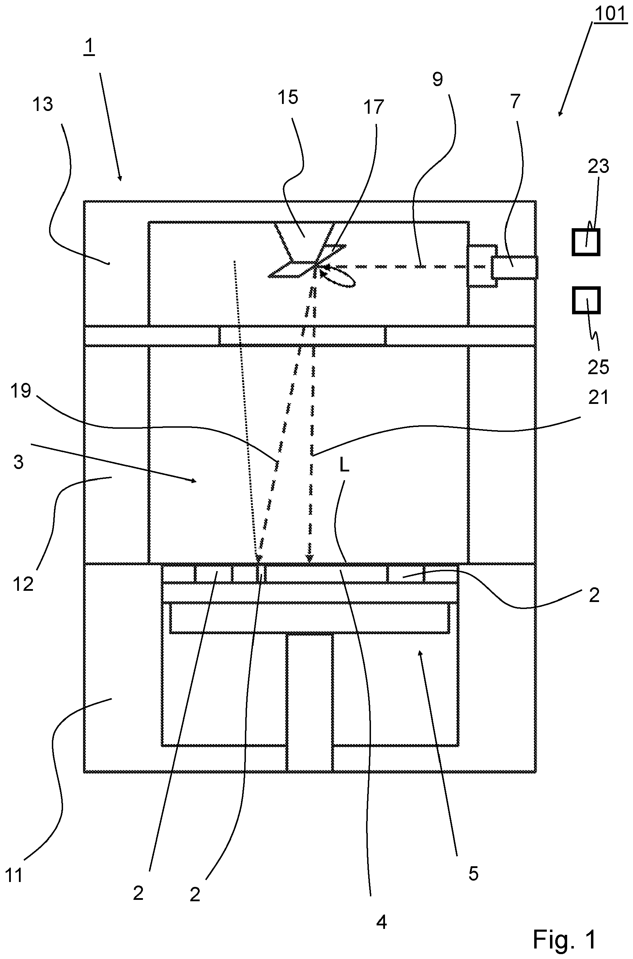

Figure 1 shows an overview of a system 101 comprising an apparatus 1 for producing an object 2 by means of additive manufacturing. The apparatus 1 is built from several frame parts 11, 12, 13. The apparatus comprises a process chamber 3 for receiving a bath of material 4 which can be solidified. In a lower frame part 11, a shaft is formed, wherein a support 5 is provided for positioning the object 2 (or even objects) in relation to the surface level L of the bath of material 4. The support 5 is movably provided in the shaft, such that after solidifying a layer, the support 5 may be lowered, and a further layer of material may be solidified on top of the part of the object 2 already formed. In a top part 13 of the apparatus 1, a solidifying device 7 is provided for solidifying a selective part of the material 4. In the embodiment shown, the solidifying device 7 is a laser device, which is arranged for producing electromagnetic radiation in the form of laser light, in order to melt powdered material 4 provided on the support 5, which then, after cooling forms a solidified part of the object 2 to be produced. However, the invention is not limited to the type of solidifying device. As can be seen, the electromagnetic radiation 9 emitted by the laser device 7 is deflected by means of a deflector unit 15, which uses a rotatable optical element 17 to direct the emitted radiation 9 towards the surface L of the layer of material 4. Depending on the position of the deflector unit 15, radiation may be emitted, as an example, according to rays 19, 21.

System 101 further comprises a status acquisition device 23 and a control unit 25. The status acquisition device 23 is arranged for acquiring a calibration status of said apparatus 1, an expected time to service of said apparatus 1, an actual expected remaining processing time for manufacturing said object 2, by said apparatus 1, a measure of a quality and/or a quantity of said powdered material 4 and a system event such as an error or a warning. The status acquisition device 23 is communicatively coupled to the control unit 25 such that said control unit 25 may receive said calibration status of said apparatus 1, said expected time to service of said apparatus 1, said actual expected remaining processing time for manufacturing said object 2, by said apparatus 1 and said measure of said quality of said powdered material 4.

The control unit 25 is further communicatively coupled to said apparatus 1 for controlling production of said object 2 and/or a further object (not shown) taking into account said acquired information. Taking into account said acquired information, the control unit 25 may for instance control the production of said object 2 and/or the further object such that a current print job comprising said object 2 and/or the further object running on said apparatus 1 may be altered. The current print job may for instance be altered in that the further object is allocated to another print job. Moreover, the production may be controlled in a way, taking into account said acquired information, wherein a further print job may be allocated to the apparatus 1, which further print job may be initiated after the current print job is completed.

The control unit 25 is further arranged for scheduling a calibration stop and/or a calibration downtime and optionally a service stop and/or a service downtime taking into account said acquired information. In addition, the control unit 25 may be further arranged for controlling production, by means of additive manufacturing, of said object 2 and/or said further object taking into account:
- said scheduled calibration stop and/or said calibration downtime;
and optionally:
- said scheduled service stop and/or said service downtime.

System 201 differs mainly from system 101 in that a plurality of apparatuses 1 are connected to the status acquisition device 23 and the control unit 25. Elements of system 201 that are similar to elements of system 101 are provided with a reference number equal to the reference number of the element in system 101. System 201 allows the current print job to be altered in that the further object is allocated to another print job and/or another apparatus 1 connected to the control unit 25. Moreover, the production may be controlled in a way, taking into account said acquired information, wherein a further print job may be allocated to the apparatus 1 or alternatively allocated to another apparatus 1 connected to the control unit 25. Allocation of a further print job or the further object to another apparatus may for instance be based on an acquired calibration status or expected time to service of the apparatus 1 such that a quality requirement and/or completion time of the further object or further print job is met while realising a relative large manufacturing output.

System 301 differs mainly from system 201 in that the system comprises a plurality of status acquisition devices 23, wherein each of the status acquisition devices is connected to an accompanying apparatus 1. Elements of system 301 that are similar to elements of system 201 are provided with a reference number equal to the reference number of the element in system 201.

Systems 101, 201, 301 may be used as follows for producing an object 2, by means of additive manufacturing, during a step of producing 40. The status acquisition device 23 acquires, during an acquisition step 50, information, preferably information that is directly related to operating conditions of said apparatus 1 which define an output performance of said apparatus 1. The acquired information is received, during a receiving step 60, by said control unit 25. The control unit 25, taking into account said acquired information, during a step of controlling 70, schedules a calibration stop and/or a calibration downtime and optionally a service stop and/or a service and preferably controls production of said object 2 and/or said further object. The acquisition step 50 may take place before or after said step of producing 40.

System 401 differs mainly from system 201 in that the system comprises a determination unit 27. Elements of system 401 that are similar to elements of system 201 are provided with a reference number equal to the reference number of the element in system 201. The determination unit 27 is communicatively coupled to said status acquisition device 23. The determination unit 27 is arranged for determining a measure of a quality of said object and/or said further object taking into account said information acquired by said status acquisition device 23.

System 501 differs mainly from system 301 in that the system comprises the determination unit 27. Elements of system 501 that are similar to elements of system 301 and 401 are provided with a reference number equal to the reference number of the element in system 301 and 401.

Systems 401 and 501 may be used as follows for producing an object 2, by means of additive manufacturing, during a step of producing 140. The status acquisition device 23 acquires, during an acquisition step 150, information, preferably information that is directly related to operating conditions of said apparatus 1 which define an output performance of said apparatus 1. The acquired information is received, during a receiving step 160, by said control unit 25 and by said determination unit 27. The control unit 25, taking into account said acquired information, during a step of controlling 170, schedules a calibration stop and/or a calibration downtime and optionally a service stop and/or a service and preferably controls production of said object and/or said further object. The acquisition step 150 may take place before or after said step of producing 140. The determination unit, taking into account said acquired information, during a step of determining 180, determines a measure of a quality of said object and/or said further object.

## Claims

1. System (101) comprising an apparatus (1) for producing an object and/or a further object by means of additive manufacturing, the apparatus comprising:
- a process chamber (2) for receiving a bath of powdered material which can be solidified by exposure to electromagnetic radiation;
- a support (5) for positioning the object in relation to a surface level of the bath of powdered material;
- a solidifying device (7) arranged for emitting a beam of electromagnetic radiation on the surface level for solidifying a selective part of said powdered material;
the system further comprising:
- a status acquisition device (23) arranged for acquiring information related to a status of said apparatus, said information comprising:
- a calibration status of said apparatus, wherein said calibration status, acquired by said status acquisition device, is determined taking into account a measure of an actual, historical and/or expected calibration status; and
- a control unit (23) that is arranged for receiving said acquired information related to said status of said apparatus and further is arranged for:
- scheduling a calibration stop and/or a calibration downtime taking into account said determined calibration status.

2. System according to claim 1, wherein said status acquisition device is arranged for acquiring said information during manufacturing of said object.

3. System according to claim 1 or 2, wherein said acquired information, acquired by said status acquisition device, comprises at least one of:
- an actual expected remaining processing time for manufacturing said object;
- a measure of a quality and/or a quantity of said powdered material;
- a system event such as an error or a warning; and
- an expected time to service of said apparatus, wherein said expected time to service, acquired by said status acquisition device, is determined taking into account a measure of an actual, historical and/or expected time to service.

4. System according to claim 3, wherein said actual expected remaining processing time, acquired by said status acquisition device, is determined taking into account a measure of an actual processing speed, historical processing speed and/or expected processing speed for manufacturing said object.

5. System according to claim 3 or 4, wherein said measure of said quality of said powdered material, acquired by said status acquisition device, is determined taking into account a measure of an actual, historical and/or expected powder material quality.

6. System according to any one of the preceding claims, wherein said system comprises a plurality of said apparatuses, preferably, wherein said object and said further object are allocated, by said control unit, to different apparatuses of said plurality of said apparatuses taking into account said acquired information.

7. System according to claim 6, wherein said system comprises a plurality of said status acquisition devices and a plurality of said control units, wherein each of said apparatuses comprises one of said status acquisition devices.

8. System according to any one of the preceding claims, said system further comprising:
- a determination unit, communicatively coupled to said status acquisition device, wherein said determination unit is arranged for determining a measure of a quality of said object and/or said further object taking into account said information acquired by said status acquisition device.

9. System according to any one of the preceding claims, wherein said control unit is further arranged for controlling production, by means of additive manufacturing, of said object and/or said further object taking into account said scheduled calibration stop and/or said calibration downtime such that said calibration stop and said calibration downtime taking into account said determined calibration status is performed after completion of said manufacturing of said object and/or before start of said manufacturing of said further object.

10. System according to any one of the preceding claims, wherein said system is arranged for determining a duration of said calibration downtime taking into account a measure of an actual, historical and/or expected calibration downtime.

11. Method for producing an object and/or a further object by means of additive manufacturing using an apparatus (1), the apparatus comprising:
- a process chamber (3) for receiving a bath of powdered material which can be solidified by exposure to electromagnetic radiation;
- a support (5) for positioning the object in relation to a surface level of the bath of material;
- a solidifying device (7) arranged for emitting a beam of electromagnetic radiation on the surface level for solidifying a selective part of said powdered material;
wherein the method comprises the steps of:
- providing a status acquisition device (23) arranged for acquiring information related to a status of said apparatus, said information comprising:
- a calibration status of said apparatus, wherein said calibration status, acquired by said status acquisition device, is determined taking into account a measure of an actual, historical and/or expected calibration status;
- acquiring, by said status acquisition device, said information related to said status of said apparatus;
- providing a control unit (25) that is arranged for receiving said acquired information related to said status of said apparatus and further arranged for:
- scheduling a calibration stop and/or a calibration downtime taking into account said determined calibration status;
- receiving, by said control unit, information related to said status of said apparatus; and
- scheduling, by said control unit, said calibration stop and said calibration downtime taking into account said determined calibration status.

12. Method according to claim 11, wherein said provided status acquisition device is arranged for acquiring said information during manufacturing of said object, wherein said acquiring of said information is performed during said manufacturing of said object, preferably, wherein said system is arranged for acquiring, by said status acquisition device, said information related to said status of said apparatus at a rate of in the range of once per second to once per hour, wherein said acquiring of said information is performed at a rate in the range of once per second to once per hour during said manufacturing of said object.

13. Method according to any one of the claims 11 and 12, wherein said method further comprises the steps of:
- providing a determination unit, communicatively coupled to said status acquisition device, wherein said determination unit is arranged for determining a measure of a quality of said object and/or said further object taking into account said information acquired by said status acquisition device;
- determining, by said determination unit, a measure of a quality of said object and/or said further object taking into account said information acquired by said status acquisition device.

14. Method according to any one of the claims 11 to 13, wherein said method further comprises the step of:
- controlling, by said control unit, production, by means of additive manufacturing, of said object and/or said further object taking into account said scheduled calibration stop and/or said calibration downtime.

15. Method according to any one of the claims 11 to 14, wherein, during said step of scheduling, said calibration stop and said calibration downtime taking into account said determined calibration status is scheduled such that said calibration stop and said calibration downtime taking into account said determined calibration status is performed after completion of said manufacturing of said object and/or before start of said manufacturing of said further object.

## Patentansprüche

1. System (101), eine Vorrichtung (1) zum Herstellen eines Objekts und/oder eines weiteren Objekts mittels additiver Fertigung umfassend, wobei die Vorrichtung Folgendes umfasst:
- eine Prozesskammer (2) zum Aufnehmen eines Bades aus pulverisiertem Material, das durch Kontakt mit elektromagnetischer Strahlung verfestigt werden kann,
- einen Träger (5) zum Positionieren des Objekts in Relation zu einem Oberflächenniveau des Bades aus dem pulverisierten Material,
- eine Verfestigungseinrichtung (7), die zum Emittieren eines Strahls elektromagnetischer Strahlung auf Oberflächenniveau zum Verfestigen eines selektiven Teils des pulverisierten Materials eingerichtet ist,
wobei das System ferner Folgendes umfasst:
- eine Statuserfassungseinrichtung (23), die zum Erfassen von Informationen bezüglich eines Status der Vorrichtung eingerichtet ist, wobei die Informationen Folgendes umfassen:
- einen Kalibrierungsstatus der Vorrichtung, wobei der Kalibrierungsstatus, der durch die Statuserfassungseinrichtung erfasst wird, unter Berücksichtigung eines Maßes eines tatsächlichen, historischen und/oder voraussichtlichen Kalibrierungsstatus bestimmt wird, und
- eine Steuereinheit (23), die zum Empfangen der erfassten Informationen bezüglich des Status der Vorrichtung eingerichtet ist und ferner für Folgendes eingerichtet ist:
- Planen eines Kalibrierungsstopps und/oder einer Kalibrierungsstillstandszeit unter Berücksichtigung des bestimmten Kalibrierungsstatus.

2. System nach Anspruch 1, wobei die Statuserfassungseinrichtung zum Erfassen der Informationen während der Fertigung des Objekts eingerichtet ist.

3. System nach Anspruch 1 oder 2, wobei die erfassten Informationen, die durch die Statuserfassungseinrichtung erfasst werden, mindestens eines der Folgenden umfassen:
- eine tatsächliche voraussichtliche verbleibende Bearbeitungszeit zur Fertigung des Objekts,
- ein Maß einer Qualität und/oder einer Quantität des pulverisierten Materials,
- ein Systemereignis wie etwa einen Fehler oder eine Warnung, und
- eine voraussichtliche Zeit bis zur Wartung der Vorrichtung, wobei die voraussichtliche Zeit bis zur Wartung, die durch die Statuserfassungseinrichtung erfasst wird, unter Berücksichtigung eines Maßes einer tatsächlichen, historischen und/oder voraussichtlichen Zeit bis zur Wartung bestimmt wird.

4. System nach Anspruch 3, wobei die tatsächliche voraussichtliche verbleibende Bearbeitungszeit, die durch die Statuserfassungseinrichtung erfasst wird, unter Berücksichtigung eines Maßes einer tatsächlichen Bearbeitungsgeschwindigkeit, historischen Bearbeitungsgeschwindigkeit und/oder voraussichtlichen Bearbeitungsgeschwindigkeit zur Fertigung des Objekts bestimmt wird.

5. System nach Anspruch 3 oder 4, wobei das Maß der Qualität des pulverisierten Materials, das durch die Statuserfassungseinrichtung erfasst wird, unter Berücksichtigung eines Maßes einer tatsächlichen, historischen und/oder voraussichtlichen Qualität des pulverisierten Materials bestimmt wird.

6. System nach einem der vorhergehenden Ansprüche, wobei das System mehrere der Vorrichtungen umfasst, vorzugsweise wobei das Objekt und das weitere Objekt durch die Steuereinheit unter Berücksichtigung der erfassten Informationen unterschiedlichen Vorrichtungen der mehreren Vorrichtungen zugewiesen werden.

7. System nach Anspruch 6, wobei das System mehrere der Statuserfassungseinrichtungen und mehrere der Steuereinheiten umfasst, wobei jede der Vorrichtungen eine der Statuserfassungseinrichtungen umfasst.

8. System nach einem der vorhergehenden Ansprüche, wobei das System ferner Folgendes umfasst:
- eine Bestimmungseinheit, die kommunikationsfähig mit der Statuserfassungseinrichtung gekoppelt ist, wobei die Bestimmungseinheit zum Bestimmen eines Maßes einer Qualität des Objekts und/oder des weiteren Objekts unter Berücksichtigung der Informationen, die durch die Statuserfassungseinrichtung erfasst werden, eingerichtet ist.

9. System nach einem der vorhergehenden Ansprüche, wobei die Steuereinheit ferner zum Steuern der Herstellung des Objekts und/oder des weiteren Objekts mittels additiver Fertigung unter Berücksichtigung des geplanten Kalibrierungsstopps und/oder der Kalibrierungsstillstandszeit eingerichtet ist, sodass der Kalibrierungsstopp und die Kalibrierungsstillstandszeit unter Berücksichtigung des bestimmten Kalibrierungsstatus nach dem Abschluss der Fertigung des Objekts und/oder vor dem Beginn der Fertigung des weiteren Objekts durchgeführt werden.

10. System nach einem der vorhergehenden Ansprüche, wobei das System zum Bestimmen einer Dauer der Kalibrierungsstillstandszeit unter Berücksichtigung eines Maßes einer tatsächlichen, historischen und/oder voraussichtlichen Kalibrierungsstillstandszeit eingerichtet ist.

11. Verfahren zum Herstellen eines Objekts und/oder eines weiteren Objekts mittels additiver Fertigung unter Verwendung einer Vorrichtung (1), wobei die Vorrichtung Folgendes umfasst:
- eine Prozesskammer (3) zum Aufnehmen eines Bades aus pulverisiertem Material, das durch Kontakt mit elektromagnetischer Strahlung verfestigt werden kann,
- einen Träger (5) zum Positionieren des Objekts in Relation zu einem Oberflächenniveau des Bades aus dem pulverisierten Material,
- eine Verfestigungseinrichtung (7), die zum Emittieren eines Strahls elektromagnetischer Strahlung auf Oberflächenniveau zum Verfestigen eines selektiven Teils des pulverisierten Materials eingerichtet ist,
wobei das Verfahren die folgenden Schritte umfasst:
- Bereitstellen einer Statuserfassungseinrichtung (23), die zum Erfassen von Informationen bezüglich eines Status der Vorrichtung eingerichtet ist, wobei die Informationen Folgendes umfassen:
- einen Kalibrierungsstatus der Vorrichtung, wobei der Kalibrierungsstatus, der durch die Statuserfassungseinrichtung erfasst wird, unter Berücksichtigung eines Maßes eines tatsächlichen, historischen und/oder voraussichtlichen Kalibrierungsstatus bestimmt wird,
- Erfassen der Informationen bezüglich des Status der Vorrichtung durch die Statuserfassungseinrichtung,
- Bereitstellen einer Steuereinheit (25), die zum Empfangen der erfassten Informationen bezüglich des Status der Vorrichtung eingerichtet ist und ferner für Folgendes eingerichtet ist:
- Planen eines Kalibrierungsstopps und/oder einer Kalibrierungsstillstandszeit unter Berücksichtigung des bestimmten Kalibrierungsstatus,
- Empfangen von Informationen bezüglich des Status der Vorrichtung durch die Steuereinheit, und
- Planen des Kalibrierungsstopps und der Kalibrierungsstillstandszeit unter Berücksichtigung des bestimmten Kalibrierungsstatus durch die Steuereinheit.

12. Verfahren nach Anspruch 11, wobei die bereitgestellte Statuserfassungseinrichtung zum Erfassen der Informationen während der Fertigung des Objekts eingerichtet ist, wobei das Erfassen der Informationen während der Fertigung des Objekts durchgeführt wird, vorzugsweise wobei das System zum Erfassen der Informationen bezüglich des Status der Vorrichtung durch die Statuserfassungseinrichtung mit einer Rate im Bereich von einmal pro Sekunde bis einmal pro Stunde, eingerichtet ist, wobei das Erfassen der Informationen mit einer Rate im Bereich von einmal pro Sekunde bis einmal pro Stunde während der Fertigung des Objekts durchgeführt wird.

13. Verfahren nach einem der Ansprüche 11 und 12, wobei das Verfahren ferner die folgenden Schritte umfasst:
- Bereitstellen einer Bestimmungseinheit, die kommunikationsfähig mit der Statuserfassungseinrichtung gekoppelt ist, wobei die Bestimmungseinheit zum Bestimmen eines Maßes einer Qualität des Objekts und/oder des weiteren Objekts unter Berücksichtigung der Informationen, die durch die Statuserfassungseinrichtung erfasst werden, eingerichtet ist,
- Bestimmen eines Maßes einer Qualität des Objekts und/oder des weiteren Objekts unter Berücksichtigung der Informationen, die durch die Statuserfassungseinrichtung erfasst werden, durch die Bestimmungseinheit.

14. Verfahren nach einem der Ansprüche 11 bis 13, wobei das Verfahren ferner die folgenden Schritte umfasst:
- Steuern der Herstellung des Objekts und/oder des weiteren Objekts mittels additiver Fertigung unter Berücksichtigung des geplanten Kalibrierungsstopps und/oder der Kalibrierungsstillstandszeit durch die Steuereinheit.

15. Verfahren nach einem der Ansprüche 11 bis 14, wobei während des Schrittes des Planens der Kalibrierungsstopp und die Kalibrierungsstillstandszeit unter Berücksichtigung des des bestimmten Kalibrierungsstatus derart geplant werden, dass der Kalibrierungsstopp und die Kalibrierungsstillstandszeit unter Berücksichtigung des bestimmten Kalibrierungsstatus nach dem Abschluss der Fertigung des Objekts und/oder vor dem Beginn der Fertigung des weiteren Objekts durchgeführt werden.

## Revendications

1. Système (101) comprenant un appareil (1) de production d'un objet et/ou d'un objet supplémentaire par fabrication additive, l'appareil comprenant :
- une chambre de traitement (2) pour recevoir un bain de matériau en poudre qui peut être solidifié par exposition à un rayonnement électromagnétique ;
- un support (5) pour positionner l'objet par rapport à un niveau de surface du bain de matériau en poudre ;
- un dispositif de solidification (7) agencé pour émettre un faisceau de rayonnement électromagnétique sur le niveau de surface pour solidifier une partie sélective dudit matériau en poudre ;
le système comprenant en outre :
- un dispositif d'acquisition d'état (23) agencé pour acquérir des informations relatives à un état dudit appareil, lesdites informations comprenant :
- un état d'étalonnage dudit appareil, dans lequel l'état d'étalonnage, acquis par ledit dispositif d'acquisition d'état, est déterminé en tenant compte d'une mesure d'un état d'étalonnage réel, historique et/ou prévu ; et
- une unité de commande (25) qui est agencée pour recevoir lesdites informations acquises relatives audit état dudit appareil et est en outre agencée pour :
- planifier un arrêt d'étalonnage et/ou une immobilisation d'étalonnage en tenant compte dudit état d'étalonnage déterminé.

2. Système selon la revendication 1, dans lequel ledit dispositif d'acquisition d'état est agencé pour acquérir lesdites informations pendant la fabrication dudit objet.

3. Système selon la revendication 1 ou 2, dans lequel lesdites informations acquises, acquises par ledit dispositif d'acquisition d'état, comprennent au moins l'un parmi :
- un temps de traitement restant prévu réel pour fabriquer ledit objet ;
- une mesure d'une qualité et/ou d'une quantité dudit matériau en poudre ;
- un événement de système tel qu'une erreur ou un avertissement ; et
- un temps de mise en service prévu dudit appareil, dans lequel ledit temps de mise en service prévu, acquis par ledit dispositif d'acquisition d'état, est déterminé en tenant compte d'une mesure d'un temps de mise en service réel, historique et/ou prévu.

4. Système selon la revendication 3, dans lequel ledit temps de traitement restant prévu, acquis par ledit dispositif d'acquisition d'état, est déterminé en tenant compte d'une mesure d'une vitesse de traitement réelle, d'une vitesse de traitement historique et/ou d'une vitesse de traitement prévue pour fabriquer ledit objet.

5. Système selon la revendication 3 ou 4, dans lequel ladite mesure de ladite qualité dudit matériau en poudre, acquise par ledit dispositif d'acquisition d'état, est déterminée en tenant compte d'une mesure d'une qualité de matériau en poudre réelle, historique et/ou prévue.

6. Système selon l'une quelconque des revendications précédentes, dans lequel ledit système comprend une pluralité desdits appareils, de préférence, dans lequel ledit objet et ledit objet supplémentaire sont attribués, par ladite unité de commande, à différents appareils de ladite pluralité desdits appareils en tenant compte desdites informations acquises.

7. Système selon la revendication 6, dans lequel ledit système comprend une pluralité desdits dispositifs d'acquisition d'état et une pluralité desdites unités de commande, dans lequel chacun desdits appareils comprend l'un desdits dispositifs d'acquisition d'état.

8. Système selon l'une quelconque des revendications précédentes, ledit système comprenant en outre :
- une unité de détermination, couplée de manière communicative audit dispositif d'acquisition d'état, dans lequel ladite unité de détermination est agencée pour déterminer une mesure d'une qualité dudit objet et/ou dudit objet supplémentaire en tenant compte desdites informations acquises par ledit dispositif d'acquisition d'état.

9. Système selon l'une quelconque des revendications précédentes, dans lequel ladite unité de commande est en outre agencée pour commander la production, par fabrication additive, dudit objet et/ou dudit objet supplémentaire en tenant compte dudit arrêt d'étalonnage planifié et/ou de ladite immobilisation d'étalonnage planifiée de sorte que ledit arrêt d'étalonnage et ladite immobilisation d'étalonnage en tenant compte dudit état d'étalonnage déterminé soient effectués après la fin de ladite fabrication dudit objet et/ou avant le début de ladite fabrication dudit objet supplémentaire.

10. Système selon l'une quelconque des revendications précédentes, dans lequel ledit système est agencé pour déterminer une durée de ladite immobilisation d'étalonnage en tenant compte d'une mesure d'une immobilisation d'étalonnage réelle, historique et/ou prévue.

11. Procédé de production d'un objet et/ou d'un objet supplémentaire par fabrication additive en utilisant un appareil (1), l'appareil comprenant :
- une chambre de traitement (3) pour recevoir un bain de matériau en poudre qui peut être solidifié par exposition à un rayonnement électromagnétique ;
- un support (5) pour positionner l'objet par rapport à un niveau de surface du bain de matériau ;
- un dispositif de solidification (7) agencé pour émettre un faisceau de rayonnement électromagnétique sur le niveau de surface pour solidifier une partie sélective dudit matériau en poudre ;
dans lequel le procédé comprend les étapes de :
- fourniture d'un dispositif d'acquisition d'état (23) agencé pour acquérir des informations relatives à un état dudit appareil, lesdites informations comprenant :
- un état d'étalonnage dudit appareil, dans lequel ledit état d'étalonnage, acquis par ledit dispositif d'acquisition d'état, est déterminé en tenant compte d'une mesure d'un état d'étalonnage réel, historique et/ou prévu ;
- acquisition, par ledit dispositif d'acquisition d'état, desdites informations relatives audit état dudit appareil ;
- fourniture d'une unité de commande (25) qui est agencée pour recevoir lesdites informations acquises relatives audit état dudit appareil et est en outre agencée pour :
- planifier un arrêt d'étalonnage et/ou une immobilisation d'étalonnage en tenant compte dudit état d'étalonnage déterminé ;
- réception, par ladite unité de commande, d'informations relatives audit état dudit appareil ; et
- planification, par ladite unité de commande, dudit arrêt d'étalonnage et de ladite immobilisation d'étalonnage en tenant compte dudit état d'étalonnage déterminé.

12. Procédé selon la revendication 11, dans lequel ledit dispositif d'acquisition d'état fourni est agencé pour acquérir lesdites informations pendant la fabrication dudit objet, dans lequel ladite acquisition desdites informations est effectuée pendant ladite fabrication dudit objet, de préférence dans lequel ledit système est agencé pour acquérir, par ledit dispositif d'acquisition d'état, lesdites informations relatives audit état dudit appareil à une fréquence comprise entre une fois par seconde et une fois par heure, dans lequel ladite acquisition desdites informations est effectuée à une fréquence comprise entre une fois par seconde et une fois par heure pendant ladite fabrication dudit objet.

13. Procédé selon l'une quelconque des revendications 11 et 12, dans lequel ledit procédé comprend en outre les étapes de :
- fourniture d'une unité de détermination, couplée de manière communicative audit dispositif d'acquisition d'état, dans lequel ladite unité de détermination est agencée pour déterminer une mesure d'une qualité dudit objet et/ou dudit objet supplémentaire en tenant compte desdites informations acquises par ledit dispositif d'acquisition d'état ;
- détermination, par ladite unité de détermination, d'une mesure d'une qualité dudit objet et/ou dudit objet supplémentaire en tenant compte desdites informations acquises par ledit dispositif d'acquisition d'état.

14. Procédé selon l'une quelconque des revendications 11 à 13, dans lequel ledit procédé comprend en outre l'étape de :
- commande, par ladite unité de commande, de la production, par fabrication additive, dudit objet et/ou dudit objet supplémentaire en tenant compte dudit arrêt d'étalonnage planifié et/ou de ladite immobilisation d'étalonnage planifiée.

15. Procédé selon l'une quelconque des revendications 11 à 14, dans lequel, pendant ladite étape de planification, ledit arrêt d'étalonnage et ladite immobilisation d'étalonnage en tenant compte dudit état d'étalonnage déterminé sont planifiés de sorte que ledit arrêt d'étalonnage et ladite immobilisation d'étalonnage en tenant compte dudit état d'étalonnage déterminé soient effectués après la fin de ladite fabrication dudit objet et/ou avant le début de ladite fabrication dudit objet supplémentaire.
